# EUROPÄISCHE PATENTSCHRIFT

(11) **EP 3 079 532 B1**
(45) Veröffentlichungstag und Bekanntmachung des Hinweises auf die Patenterteilung: **10.05.2017**
(21) Anmeldenummer: 15795164.1
(22) Anmeldetag: 17.11.2015
(51) Int. Cl.: A47J 31/36, A47J 31/44

(54) **BRÜHMODUL, KAPSELERKENNUNGSMODUL UND GETRÄNKEZUBEREITUNGSMASCHINE**
BREWING MODULE, CAPSULE SENSING MODULE AND MACHINE FOR PREPARING BEVERAGES
MODULE D'INFUSION, MODULE DE DÉTECTION DE CAPSULE ET MACHINE DE PRÉPARATION DE BOISSONS

(30) Priorität: 01.12.2014 EP 14195680
(43) Veröffentlichungstag der Anmeldung: 19.10.2016
(73) Patentinhaber: Qbo Coffee GmbH, 8304 Wallisellen (CH)
(72) Erfinder: RUBIN, Andres, CH-8608 Bubikon (CH); ZWICKER, Dominic, CH-9650 Nesslau (CH); TANNER, Pascal, CH-8716 Schmerikon (CH); FOSCAN, Claudio, 8645 Rapperswil-Jona (CH)
(74) Vertreter: Frei Patent Attorneys
(86) Internationale Anmeldenummer: PCT/EP2015/076812
(87) Internationale Veröffentlichungsnummer: WO 2016/087190

(56) Entgegenhaltungen:
- EP-B1- 1 786 303
- WO-A1-2012/123440

## Beschreibung

Die Erfindung betrifft Extraktionsgeräte zum Zubereiten von Getränken oder dergleichen aus einem in einer Kapsel enthaltenen Extraktionsgut, beispielsweise gemahlenem Kaffee. Sie betrifft insbesondere ein Brühmodul für ein Extraktionsgerät, ein Kapselerkennungsmodul sowie eine Getränkezubereitungsmaschine mit einem solchen Brühmodul und/oder Kapselerkennungsmodul.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul. Ein solches weist eine Brühkammer auf, in der die Kapsel aufgenommen wird. Besonders beliebt sind Brühmodule, bei welchen die Kapsel eingeworfen und die Brühkammer manuell mittels eines Bedienhebels oder automatisch motorisiert verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind im Allgemeinen als horizontale Brühmodule ausgebildet, d.h. der Kapseleinwurf erfolgt von oben, das Verschliessen der Brühkammer ist eine horizontale Relativbewegung zweier Brühkammerteile, die Brühflüssigkeit fliesst im wesentlichen horizontal, und der Kapselbehälter ist unterhalb der Brühkammer ausgebildet.

Aus der WO 2012/123440 ist eine Getränkezubereitungsmaschine bekannt geworden, welche eine Positionierungseinrichtung zum Halten einer in die Maschine eingeworfenen Kapsel in einer Zwischenposition ausserhalb des Brühmoduls aufweist. In dieser Zwischenposition kann eine Sensoranordnung beispielsweise auf der Kapsel vorhandene Informationen auslesen und abhängig vom Resultat der Auslesung einen automatischen Transfer der Kapsel in das Brühmodul auslösen und den Brühprozess starten. Dieses Vorgehen hat den Vorteil, dass eine Kapselerkennung und ein an die erkannte Kapsel angepasster Brühprozess möglich werden. Nachteilig ist jedoch die für eine sinnvolle Umsetzung benötigte relativ komplizierte Mechanik mit entweder mehreren unabhängig voneinander motorisiert angetriebenen Einheiten oder einem Kopplungsmechanismus, wobei dann ein Einlegen einer Kapsel während eines Brühvorgangs nicht möglich ist.

EP 1 786 303 zeigt ebenfalls eine Getränkezubereitungsvorrichtung mit einer Sensoranordnung zum Erfassen von Eigenschaften einer eingeworfenen Portionspackung in der Form eines "Pods". Das Brühmodul weist zwei gegeneinander verschwenkbare Brühmodulteile auf. Aufgrund dieser Verschwenkbarkeit kann die zwischen den Brühmodulteilen ausgebildete Brühkammer nach oben geöffnet, geschlossen oder für den Auswurf der Portionspackung nach unten geöffnet sein. Nach dem Einwurf wird die Portionspackung auf der Oberseite der Brühmodulteile seitlich geführt in einer Zwischenposition gehalten, und dort findet das Erfassen der Eigenschaften statt.

Anschliessend wird, sofern die Portionspackung erkannt wurde, die Brühkammer durch Verschwenken der Brühmodulteile nach oben hin geöffnet, so dass die Portionspackung in die Brühkammer fallen kann, woraufhin die Brühkammer durch eine erneute, in die Gegenrichtung verlaufende Schwenkbewegung geschlossen. Dann wird der Brühprozess durchgeführt und anschliessend die Brühkammer durch eine Weiterführung der Schwenkbewegung nach unten hin geöffnet, wodurch die Portionspackung nach unten ausgeworfen wird.

Dieses Vorgehen ist geeignet für die verhältnismässig flachen, als "Pods" bekannten Portionspackungen. Es lässt sich jedoch nicht ohne Weiteres auf becher- oder beispielsweise würfelförmige Portionskapseln übertragen.

Es ist Aufgabe der Erfindung, eine Getränkezubereitungsmaschine zur Verfügung zu stellen, welche Nachteile des Standes der Technik überwindet und welche durch eine möglichst einfache Konstruktion die Erfassung von Eigenschaften einer verwendeten Portionskapsel vor dem Brühprozess ermöglicht.

Das erfindungsgemässe Brühmodul für eine Getränkezubereitungsmaschine zum Zubereiten eines Brühgetränks aus einer Portionenkapsel weist auf:
- Ein Gehäuse, welches eine Kapseleinlegeöffnung aufweist, durch welche die Kapsel, beispielsweise in einer definierten Orientierung, eingelegt werden kann;
- ein erstes Brühmodulteil und ein relativ zu diesem bewegbares zweites Brühmodulteil, wobei durch das erste und zweite Brühmodulteil eine Brühkammer bildbar ist, welche die sich in einer Brühposition befindende Kapsel beim Brühvorgang mindestens teilweise umgibt, wobei das Brühmodul eingerichtet ist, durch das Einleiten einer Brühflüssigkeit in die Kapsel ein Brühgetränk zu brühen und dieses aus der Kapsel abzuleiten;

- wobei das erste und zweite Brühmodulteil relativ zueinander zwischen drei verschiedenen, definierten Positionen bewegbar sind,
- wobei in der ersten Position die Brühkammer gebildet wird,
- wobei nach einer Bewegung von der ersten in die zweite Position eine sich in der Brühkammer befindende Kapsel durch die Wirkung der Gravitation nach unten in einen Kapselbehälter fällt, wobei aber in der zweiten Position die Brühmodulteile bewirken, dass eine in durch die Kapseleinlegeöffnung eingelegte Kapsel vertikal oberhalb einer Höhe der Brühposition an einer Kapselerkennungsposition aufgehalten wird,
- wobei in der dritten Position eine an der Kapselerkennungsposition befindliche Kapsel von dieser nach unten, im Wesentlichen bis auf die Höhe der Brühposition, fallen kann,
- und wobei die zweite Position zwischen der ersten Position und der dritten Position ist.

Die erste Position entspricht dem geschlossenen Zustand der Brühkammer. Neu am erfindungsgemässen Ansatz ist, dass es zwei verschiedene, definierte Zustände gibt, in denen die Brühkammer geöffnet ist und eine Kapsel nach dem Brühprozess nach unten fallen kann. Diese Zustände mit geöffneter Brühkammer werden durch die zweite bzw. dritte Position definiert. In der zweiten Position ist die Brühkammer nach unten offen, aber nach oben für den Kapseleinwurf quasi geschlossen, und nur in der dritten Position ist sie nach oben und unten ganz offen.

Die Position, in welche die Kapsel aus der Kapselerkennungsposition fällt, wenn die Brühmodulteile in der dritten Position sind, kann direkt die Brühposition sein. Es kann aber auch vorgesehen sein, dass die Kapsel in eine Zwischenposition, insbesondere auf vertikaler Höhe der Brühposition, fällt, und erst durch das Schliessen der Brühkammer, d.h. den Übergang der Brühmodulteile in die erste Position, in die Brühposition verschoben wird.

Die Kapsel kann beim Fall aus der Kapselerkennungsposition geführt werden, und sie wird auf Höhe der Brühposition bzw. der Zwischenposition aufgehalten, was durch seitlich angreifende, verschwenkbare oder nicht verschwenkbare Führungsmittel wie bspw. in WO 2015/048914beschrieben, oder auch durch andere Mittel wie bspw. aus WO 2013/110206 bekannt, oder gegebenenfalls auch, gemäss WO 2010/118545, eine Auflage, welche gleichzeitig eine Begrenzung der Brühkammer bildet, bewirkt werden kann.

Das Brühmodul kann Kapselerkennungsmittel aufweisen, um Eigenschaften einer sich in der Kapselerkennungsposition befindende Kapsel anhand von vordefinierten Merkmalen zu erkennen. Mit Kapselerkennungsmitteln kann - das ist an sich bekannt - insbesondere erstens bestimmt werden, ob die eingelegte Kapsel überhaupt für eine Verwendung in der Getränkezubereitungsmaschine geeignet ist oder nicht. Zweitens besteht die Möglichkeit, aufgrund erkannter Kapseleigenschaften an den Benutzer entsprechende Informationen auszugeben, bspw. über ein Display. Es kann beispielsweise der Getränketyp (Kaffee, Tee, etc.), die Sorte (z.B. "100% Arabica"), die empfohlene Zubereitungsart (z.B. "Espresso", "Ristretto" oder "Lungo" etc.) und/oder eine andere Information angezeigt werden. Drittens kann auch das von der Kaffeemaschine für die Brühung verwendete Programm aufgrund der erkannten Kapselsorte gewählt werden, bspw. können der Brühdruck, die Brühdauer sowie eventuell auch die Temperatur und/oder andere Eigenschaften abhängig davon eingestellt werden, ob die eingelegte Kapsel für die Zubereitung von z.B. Ristretto, Espresso oder Lungo vorgesehen ist.

Diese Kapselerkennungsmittel können optische und/oder andere Eigenschaften der Kapsel erfassen. Nebst geeigneten optisch auslesbaren Merkmalen, beispielsweise Strichcode, 2D-MatrixCode (bspw. QR-Code oder Aztec-Code), Piktogramm (Icon), ein Code gemäss einer der europäischen Patentanmeldungen 14 197 487.3, 14 197 488.1 und/oder 14 197 489.9 und/oder auch eine bestimmte Farbgebung, sind auch magnetische Eigenschaften oder ein kontaktlos auslesbarer RFID-Chip als Erkennungsmerkmale verwendbar.

Das erfindungsgemässe Vorgehen hat den Vorteil, dass sowohl dann eine neue Kapsel eingelegt werden kann, wenn die Brühmodulteile in der ersten Position sind (die Brühkammer ist geschlossen, bspw. während des Brühprozesses), als auch wenn die Brühmodulteile in der zweiten Position sind oder während sie von der ersten in die zweite Position bewegt werden, also beispielsweise nach Abschluss des Brühprozesses. Der Kapselerkennungsprozess für eine zweite Kapsel kann also zum Beispiel beginnen, während der Brühprozess für eine erste Kapsel noch im Gange ist.

Trotz dieses Vorteils kommt das Brühmodul bzw. die Getränkezubereitungsmaschine ohne zusätzliche bewegliche Teile aus, ein einziger Antrieb reicht aus.

Die Bewegung der Brühmodulteile relativ zueinander ist insbesondere eine lineare Bewegung, d.h. eine Translation entlang einer Achse. Eine Verschwenkbarkeit der Brühmodulteile ist aufgrund des erfindungsgemässen Vorgehens nicht nötig, ist aber auch nicht ausgeschlossen.

Das Brühmodul ist insbesondere ein horizontales Brühmodul, und die Achse der Bewegung ist insbesondere eine im Wesentlichen horizontale Achse, d.h. sie verläuft parallel zur Oberfläche, auf der die Getränkezubereitungsmaschine abgestellt ist, oder ungefähr parallel dazu, bis zu bspw. maximal einem Winkel von 20°.

Die erste, zweite und dritte Position können mechanisch, durch Anschläge und/oder als Rastpositionen oder dergleichen definiert sein.

In Ausführungsformen ist der Antrieb für die Bewegung der Brühmodulteile relativ zueinander insbesondere ein elektrischer Antrieb. In diesen Ausführungsformen können die erste, zweite und/oder dritte Position, insbesondere die zweite Position, auch elektronisch definiert sein, indem der elektrische Antrieb so programmiert ist, dass er die Brühmodulteile jeweils um einen vorgegebenen Weg relativ zueinander bewegt. In solchen Ausführungsformen gehört die Ansteuerung des elektrischen Antriebs bspw. ebenfalls zum Brühmodul, auch wenn sie örtlich an einem anderen Ort der Getränkezubereitungsmaschine vorhanden und bspw. in die Ansteuerung der ganzen Maschine integriert ist.

Die Ansteuerung des Antriebs kann insbesondere so programmiert sein, dass ein Bewegen in die dritte Position erst nach einem Kapselerkennungsvorgang erfolgt und dass nach erfolgtem Brühvorgang die Brühmodulteile immer aus der ersten in die zweite Position fahren, ausser es hat während des Brühvorgangs bereits ein Kapselerkennungsvorgang mit einer nächsten Kapsel stattgefunden.

Gemäss einem Ausführungsbeispiel bewegt ein von einem Elektromotor angetriebenes Ritzel einen Schwenkhebel mit einer zum Ritzel passenden Verzahnung, welcher Schwenkhebel mit einem Hebelarm eines Kniehebels verbunden ist oder diesen bildet. Der Kniehebel bewirkt eine Translationsbewegung des Brühmodulteils zwischen der ersten Position und der dritten Position.

In vielen Ausführungsformen wird eines der Brühmodulteile (nachfolgend "das ortsfeste Brühmodulteil", bspw. die Ausleitvorrichtung) gehäusefest montiert sein, während beim Übergang zwischen den Positionen das andere Brühmodulteil (nachfolgend "das bewegte Brühmodulteil", beispielsweise der Injektor) bewegt wird. Die relative Bewegung der Brühmodulteile zueinander wird dann also durch die Bewegung von lediglich dem bewegten Brühmodulteil bewirkt.

Der Umstand, dass die Brühmodulteile bewirken, dass eine durch die Kapseleinlegeöffnung eingelegte Kapsel vertikal oberhalb der Brühposition an einer Kapselerkennungsposition aufgehalten wird, kann bspw. durch eine Auflagepartie eines der Brühmodulteile - insbesondere des bewegten Brühmodulteils - bewirkt werden. Eine solche Auflagepartie kann einen Einwurfweg von der Kapselerkennungsposition nach unten so weit versperren, dass Kapsel nicht weiter nach unten fallen kann. Wenn - wie an sich bekannt - die Kapsel durch geeignete seitliche Führungsmittel in ihrer Orientierung geführt ist, kann das durch eine in der zweiten Position lediglich wenig in den Einwurfweg hinein ragende Partie des bewegten Brühmodulteils geschehen. Dadurch kann das Brühmodul insbesondere so ausgeführt sein, dass die Auflagepanie fest mit dem Rest des Brühmodulteils verbunden und bspw. sogar einstückig mit diesem ist und also ohne bewegliche Teile zwischen der Auflagepartie und den die Brühkammer mit-bildenden Partien des Brühmodulteils auskommt.

In Ausführungsformen bildet ein oberseitig zum anderen Brühmodulteil hin ragendes Element des einen Brühmodulteils die Auflagepartie.

Zum Auslesen von Kapseleigenschaften an der Kapselerkennungsposition kann ein Kapselerkennungsmodul zum Einsatz kommen. Ein solches Kapselerkennungsmodul kann einen optischen Sensor, insbesondere eine Kamera zum Erfassen von optischen Eigenschaften der Kapsel aufweisen. Zwischen der Kamera und der an der Kapselerkennungsposition befindlichen Kapsel kann ein Fenster (Kapselerkennungsfenster) aus einem transparenten Material vorhanden sein, welches die Kamera vor Wasserdampf und Verunreinigungen schützt.

In Ausführungsformen ist ausserdem ein aktiver Lüfter zum Erzeugen eines Luftstroms auf der Seite des Kapselerkennungsfensters zur Kapselerkennungsposition hin vorhanden.

Durch einen solchen Lüfter wird einem Beschlagen des Kapselerkennungsfensters effizient vorgebeugt. Es hat sich gezeigt, dass durch diese an sich einfache Massnahme die Verlässlichkeit der Kapselerkennung markant verbessert werden kann.

Ein Kapselerkennungsfenster der genannten Art kann in einem nicht-rechten Winkel von bspw. höchstens 80° zu einer Achse zwischen der Kapselerkennungsposition und dem optischen Sensor angeordnet sein. Dadurch sind Reflexionen der Lichtquelle am Fenster vom Ort des optischen Sensors her nicht sichtbar.

Als die Achse zwischen der Kapselerkennungsposition und dem optischen Sensor wird hier eine Achse im optischen Sinn verstanden, d.h. im Falle von Lichtumlenkungsmitteln zwischen Kapselerkennungsposition und Sensor entspricht die Achse nicht notwendigerweise einer direkten Verbindung sondern einem Strahlengang eines auf kürzestem Weg von der Mitte einer von der Kamera erfassten Fläche der Kapsel an der Kapselerkennungsposition zur Mitte des Sensors gelangenden Lichtstrahls. Wenn der optische Sensor eine Kamera mit einer Kameraoptik ist, kann die Achse mit einer optischen Achse (Symmetrieachse) der Kameraoptik zusammenfallen.

Ein Kapselerkennungsmodul kann ausserdem beispielsweise mindestens eine Lichtquelle zur Beleuchtung der Kapsel an der Kapselerkennungsposition aufweisen, insbesondere hinter dem Kapselerkennungsfenster, d.h. der Seite des Kapselerkennungsfensters zum optischen Sensor hin. Eine solche Lichtquelle kann bspw. eine LED oder eine Anzahl von LEDs umfassen. Zwischen der Lichtquelle und der Kapselerkennungsposition, bspw. ebenfalls hinter dem Fenster, kann ein Lichtdiffusor vorhanden sein, um auffällige Reflexe auf der Kapsel zu verhindern, insbesondere in Fällen, in denen die Kapseloberfläche leicht spiegelnd wirkt.

Die Erfindung betrifft auch eine Getränkezubereitungsmaschine mit einem erfindungsgemässen Brühmodul.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Seitenansicht eines Brühmoduls;
- Fig. 2: eine Schnittdarstellung des Brühmoduls von Fig. 1, entlang der Ebene II-II in Fig. 3 geschnitten;
- Fig. 3: eine Ansicht des Brühmoduls von Fig. 1 von oben;
- Fig. 4: eine Explosionsdarstellung von Elementen des Brühmoduls gemäss Fig. 1-3 (ohne einige der Gehäuseteile);
- Fig. 5-9: je eine Schnittdarstellung des Brühmoduls gemäss Fig. 1-3 während verschiedener Phasen des Betriebs;
- Fig. 10: ein Detail einer möglichen Ausführungsform einer Ausleitvorrichtung;
- Fig. 11: eine Explosionsdarstellung der oberseitig vorhandenen Elemente des Brühmoduls mit Kapselerkennungsmodul;
- Fig. 12: eine Explosionsdarstellung einer Kameraeinheit des Kapselerkennungsmoduls; und
- Fig. 13: ein Schema einer Getränkezubereitungsmaschine.

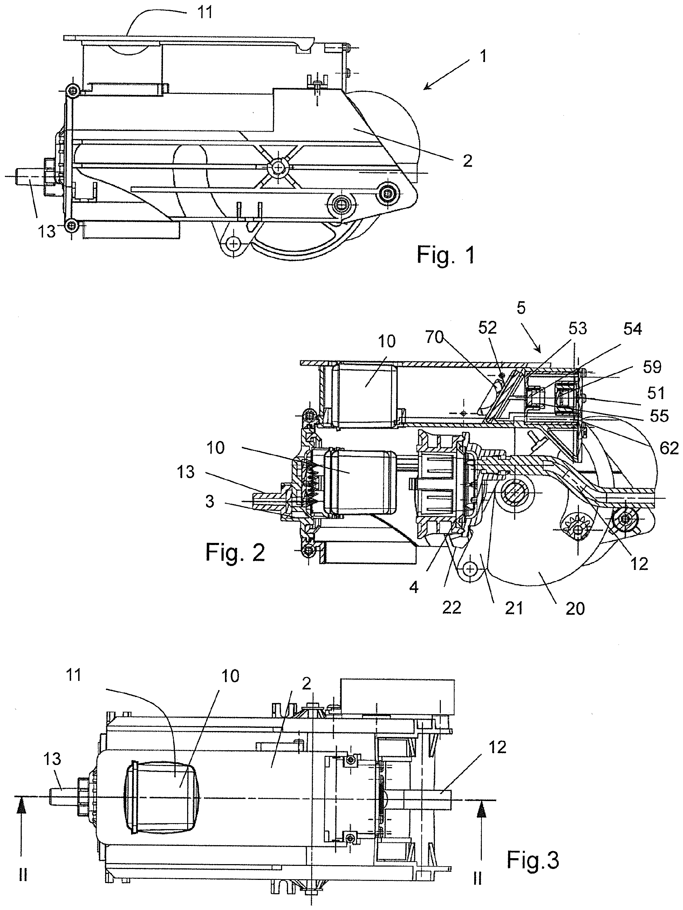

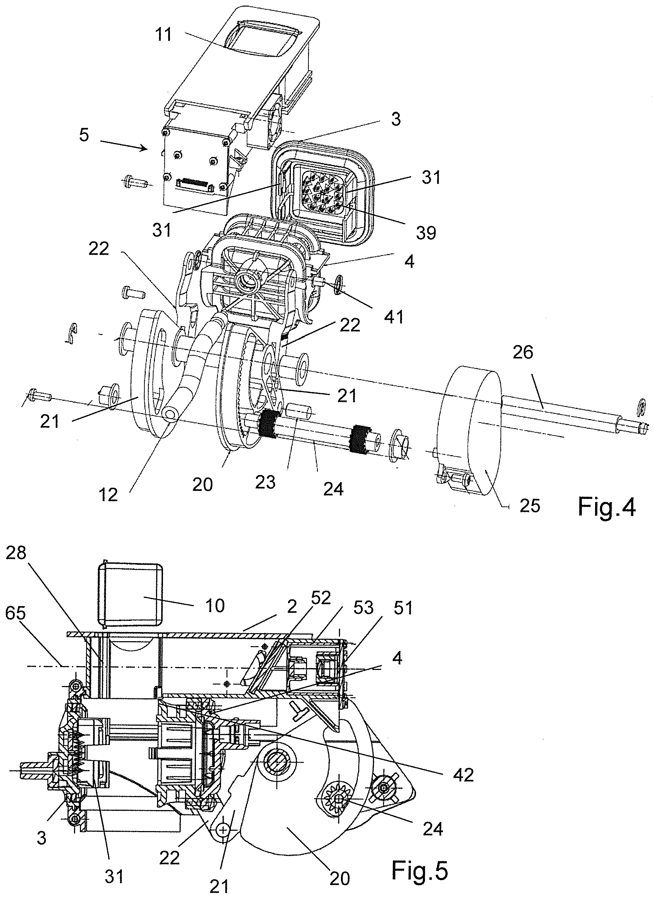

Das Brühmodul 1 gemäss **Figuren 1-3**, dessen Elemente in **Figur 4** in einer Explosionsdarstellung zu sehen sind (wobei einige Elemente, insbesondere Gehäuseteile, ausgeblendet sind), weist ein äusseres Brühmodulgehäuse 2 auf. Dieses setzt sich im dargestellten Ausführungsbeispiel aus einem oberen Gehäuseteil (Kapselerkennungsgehäuse) und einem unteren Gehäuseteil (Brühkammereinheitsgehäuse) zusammen. Im Brühmodulgehäuse 2 sind zwei relativ zueinander bewegbare Brühmodulteile geführt, nämlich eine Ausleitvorrichtung 3 und ein Injektor 4.

Der Injektor 4 weist Perforationselemente zum Anstechen einer Kapsel 10 auf, die über eine Einlegeöffnung 11 in das Brühmodul einbringbar ist und mindestens teilweise mit einem Extraktionsgut - bspw. gemahlenem Kaffee - gefüllt ist. Der Injektor 4 ist eingerichtet, eine Flüssigkeit - bspw. heisses Wasser - durch die Perforationselemente oder an diesen vorbei in die angestochene Kapsel einzubringen wobei das Wasser über eine Wasserzuführung 12 zuführbar ist, die bspw. einen flexiblen Schlauch aufweisen kann.

Auch die Ausleitvorrichtung 3 weist im hier beschriebenen Ausführungsbeispiel Perforationselemente auf, nämlich extraktionsseitige Anstechspitzen 39. Diese können beispielsweise ausgebildet sein wie in WO 2015/039258oder in WO 2010/118544 beschrieben oder eine andere Ausgestaltung aufweisen; auch die Verwendung von anderen Prinzipien als Anstechspitzen, bspw. mit gitterrostartigen Strukturen, sind möglich.

Ausserdem weist die Ausleitvorrichtung beidseits der Kapsel zur Injektorseite hin ragende Führungsmittel 31 auf, wie sie beispielsweise in WO 2015/048914 beschrieben sind, auf deren Inhalt hier betreffend die Funktionsweise dieser Führungsmittel sowie von entsprechenden Rückholmitteln des Injektors 4 ausdrücklich Bezug genommen wird.

Für die Zubereitung eines Brühgetränks wird wie an sich bekannt eine Kapsel zwischen der Ausleitvorrichtung 3 und dem Injektor 4 platziert, und diese werden so aufeinander zubewegt, dass zwischen diesen eine die Kapsel umfassende Brühkammer gebildet wird. Das heisse Wasser wird durch den Injektor unter Druck der Kapsel zugeführt, und das Extraktionsprodukt fliesst durch die Ausleitvorrichtung 3 via einen Getränkeauslauf 13 in ein bspw. darunter platziertes Trinkgefäss ab.

Die relative Bewegung der Brühmodulteile Ausleitvorrichtung und Injektor wird im hier beschriebenen Ausführungsbeispiel dadurch erreicht, dass die Ausleitvorrichtung 3 gehäusefest montiert ist, während der Injektor 4 entlang der horizontalen Achse bewegbar ist. Der Antrieb des Injektors erfolgt über einen motorisiert angetriebenen Kniehebel. Eine mit einem Elektromotor (in den Figuren nicht sichtbar, bspw. durch ein Antriebsgehäuse 25 abgedeckt) in Verbindung stehende Ritzelwelle 24 treibt eine verzahnte Antriebsscheibe 20 an, die drehfest mit einem ersten Kniehebelarm 21 verbunden ist, so dass eine Schwenkbewegung der Antriebsscheibe 20 um ihre Achse 26 den ersten Kniehebelarm 21 ebenfalls um diese Achse schwenkt. Ein zweiter Kniehebelarm 22 ist an einer Seite über einen Kniehebelbolzen 23 mit dem ersten Kniehebelarm 21 verbunden und wirkt an der anderen Seite mit einem Führungszapfen 41 des Injektors 4 zusammen. Da der Injektor durch das Gehäuse so gelagert ist, dass er nur linear entlang der im Wesentlichen horizontalen Achse verschiebbar ist, bewirkt eine Schwenkbewegung von Antriebsscheibe und erstem Kniehebelarm daher ein Strecken bzw. Knicken des vom Kniehebel gebildeten Kniegelenks und dadurch eine lineare Verschiebung des Injektors 4.

Oberhalb der Brühkammereinheit mit Ausleitvorrichtung 3 und Injektor 4 weist das Brühmodul ein Kapselerkennungsmodul 5 mit einer Kamera auf, dessen Aufbau und Funktionsweise nachstehend noch eingehender beschrieben wird.

Ein Betriebsablauf wird anhand von Figuren 5-9 beschrieben.

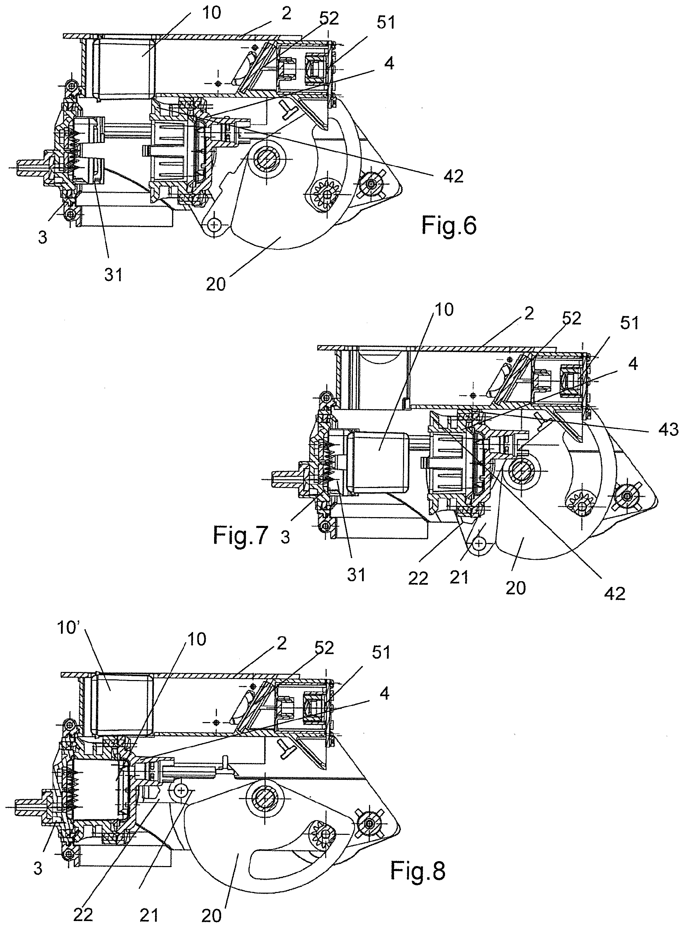

Beim Einlegen einer Kapsel 10 befindet sich der Injektor 4 beispielsweise an der zweiten Position, wie in **Figur 5** dargestellt. In dieser ist die Brühkammer zwar geöffnet, der Injektor ist aber nur so weit zur Injektionsseite zurückgefahren, dass eine Auflagepartie 42 des Injektors 4 die in der Einlegeöffnung 11 und durch eine seitliche Führung 28 geführte Kapsel 10 an der Kapselerkennungsposition zurückhält, was in **Figur 6** dargestellt ist.

Während sich die Kapsel 10 an dieser Kapselerkennungsposition gemäss Figur 6 befindet, wird die nachstehend noch beschriebene Kapselerkennung durchgeführt, wofür beispielsweise ein optisches Merkmal detektiert wird, welches an der zur Injektionsseite weisenden Seite der Kapsel (Kapselboden) angebracht ist.

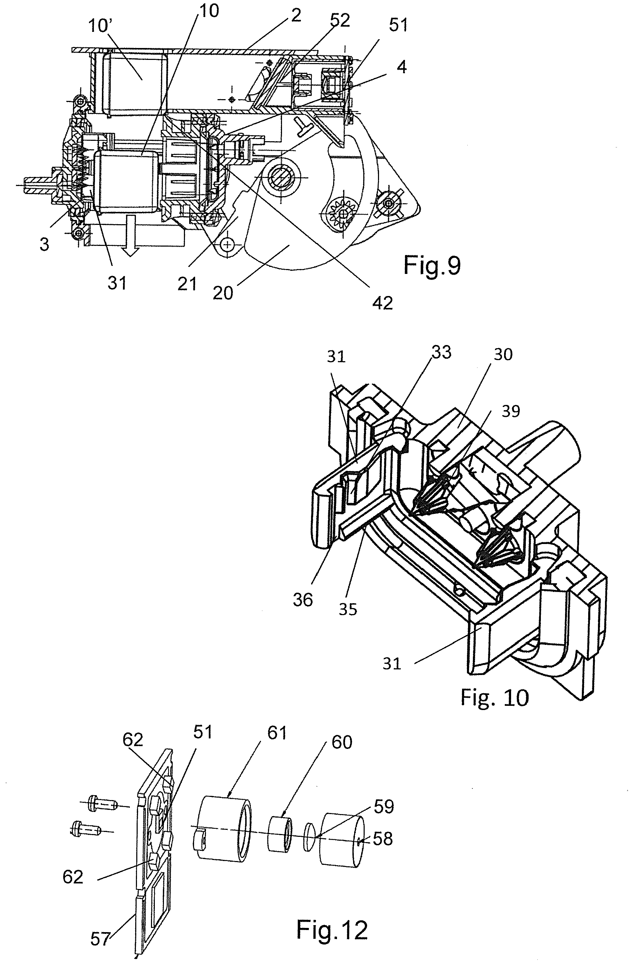

Gegebenenfalls abhängig von einem Resultat der Kapselerkennung wird anschliessend der Injektor 4 noch weiter zur Injektionsseite hin in die dritte Position gefahren, was in **Figur 7** illustriert ist. Dadurch wird die Auflagepartie von der Kapsel weg verschoben, und die Kapsel kann nach unten fallen. Auf Höhe der Brühposition wird sie durch eine Auflage der seitlichen Führungsmittel 31 gestoppt. Dies kann bspw. durch eine Auflage 35 geschehen, auf welcher ein Kragen und/oder eine andere Partie der Kapsel zu liegen kommt, wenn diese, mit dem Kragen in einer an die seitliche Führung 28 anschliessenden (ersten) Bahn 33 geführt, nach unten fällt. Dieses Prinzip ist in **Figur 10** illustriert und in WO 2015/048914 ausführlich beschrieben.

Nach Aktivierung durch den Benutzer oder selbsttätig wird anschliessend die Brühkammer geschlossen, wofür der Injektor von der dritten in die erste Position bewegt wird. Das Brühmodul mit dem Injektor 4 in der ersten Position zeigt **Figur 8**. Die Kapsel 10 ist beidseitig angestochen, und der Brühprozess findet statt, indem heisses Wasser unter Druck in die Kapsel geleitet wird. Beispielsweise beim Verschliessen der Brühkammer wird auch der Kapselkragen aus der erwähnten ersten Balm 33 verschoben.

Während des Brühprozesses kann optional bereits eine weitere Kapsel 10' eingelegt werden, die dann auf der bereits erwähnten Auflagepartie 42 oder einer weiteren Auflagepartie 43 aufliegt und in der Kapselerkennungsposition bleibt. Es kann also während des Brühprozesses der ersten Kapsel 10 bereits die Erkennung der zweiten Kapsel 10' erfolgen.

Nach Beendigung des Brühprozesses wird der Injektor zurück in die zweite Position bewegt. Die verbrauchte Kapsel 10 kann nach unten in einen Kapselbehälter fallen (**Figur 9**).

Der Umstand, dass die verbrauchte Kapsel nach unten fallen kann, kann bewirkt werden, indem die Kapselposition nach dem Brühprozess gegenüber der Position nach dem Einwurf so verschoben ist, dass sie nicht mehr auf der Auflage 35 aufliegt, sondern der Kragen beispielsweise in einer zweiten Bahn 36 geführt wird, wie ebenfalls in WO 2015/048914beschrieben. Dabei besteht sowohl die Option, dass die zweite Bahn 36 im Vergleich zur ersten Bahn 33 weiter injektionsseitig verläuft als auch umgekehrt.

Alternativ zu diesem Vorgehen gemäss WO 2015/048914kann beispielsweise auch vorgesehen sein, dass die seitlichen Führungsmittel nach Beendigung des Brühprozesses nach aussen verschwenkt sind, oder dass beim Schliessen der Brühkammer und/oder deren Öffnen nach dem Brühprozess anderswie Halte- oder Führungsmittel relativ zur Kapsel bewegt werden.

Anstelle einer Bewegung von der ersten in die zweite Position kann dann auch direkt eine Bewegung in die dritte Position erfolgen, wenn ein während des Brühvorgangs stattfindender Kapselerkennungsprozess einer zweiten Kapsel bereits abgeschlossen ist.

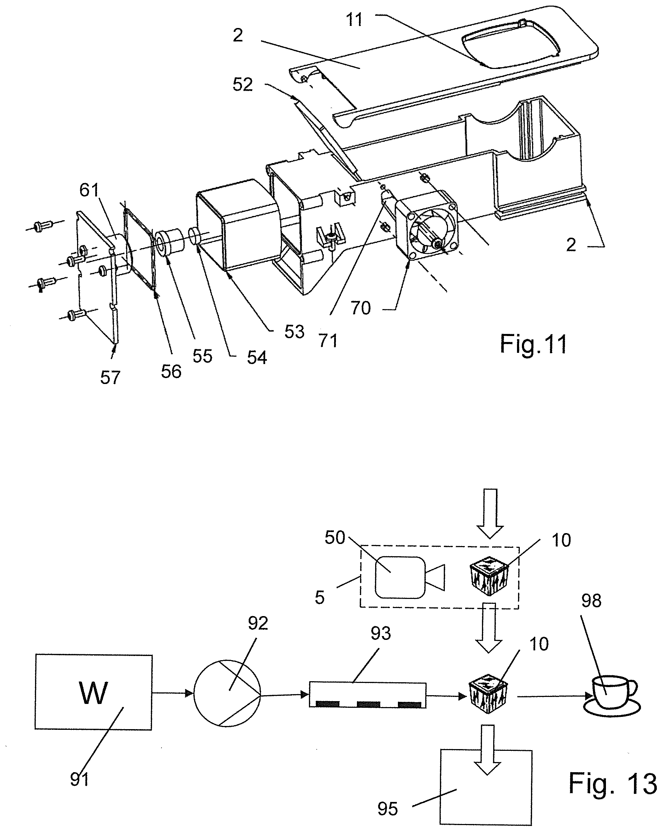

**Figur 11** zeigt das Kapselerkennungsmodul inklusive entsprechende Teile des Gehäuses 2 in einer Explosionsdarstellung. **Figur 12** zeigt Teile der Kamera sowie der Beleuchtungsmittel des Kapselerkennungsmoduls, ebenfalls in einer Explosionsdarstellung. Einige der entsprechenden Elemente sind auch in Fig. 5 sichtbar.

Nach einem Brühvorgang wird Wasserdampf auch in den Bereich oberhalb der Brühposition und in eine Umgebung der Kapselerkennungsposition gelangen. Das Kapselerkennungsmodul weist nebst der Kameraeinheit daher auch ein Kapselerkennungsfenster 52 auf, welches die Kamera und gegebenenfalls andere optische oder elektronische Bauteile vom Bereich trennt, in welchen der Wasserdampf gelangen kann.

Auf einer Platine 57 sind unter anderem mehrere LEDs 62 als Lichtquellen angeordnet, welche beim Kapselerkennungsvorgang Licht erzeugen, das via einen Diffusor 53 (vgl. auch Fig. 5) und ein Kapselerkennungsfenster 52 auf die Kapsel geworfen wird. An der Kapsel ist ein geeignetes optisch auslesbares Merkmal vorhanden, beispielsweise ein Strichcode, ein 2D-MatrixCode (bspw. QR-Code oder Aztec-Code), ein anderer definierter Code, ein Piktogramm (Icon) und/oder auch eine bestimmte Farbgebung.

Die durch die Lichtquellen beleuchtete Seite der Kapsel wird von der Kamera erfasst und in der Kamera oder durch ein separates, beispielsweise ebenfalls in der Kaffeemaschine vorhandenes Modul (nicht abgebildet) ausgewertet.

Das von der beleuchteten Kapsel zurückgeworfene Licht gelangt zu diesem Zweck durch das Kapselerkennungsfenster 52, und ein Diffusorfenster 54 im Diffusor 53 (die Diffusorwirkung besteht nur um das Diffusorfenster 54 herum, das Diffusorfenster 54 selbst ist transparent) zur Kamera, welche eine Blende 58, mindestens eine Linse 59 sowie den ebenfalls auf der Platine 57 vorhandenen Kamerasensor 51, bspw. mit einem CCD oder CMOS-Sensorarray aufweist.

Das Diffusorfenster 54 wird hier durch einen Diffusorfensterhalter 55 gehalten, und die Linse 59 ist in einer Linsenfixierung 60 geführt, welche ihrerseits durch einen auf der Platine 57 montierten Linsenhalter 61 gehalten wird. Die mechanischen Details der Kameraoptik und die Ausgestaltung des Diffusors können jedoch auch ohne Weiteres anders gewählt werden.

Zwischen dem Diffusor 53 und der Platine 57 ist noch ein optionaler Dichtungsrahmen 56 vorhanden, der zusammen mit dem Diffusor selbst für einen zusätzlichen Schutz der Kameraelektronik sorgt.

In Bezug auf die Kapselerkennungsposition vor dem Kapselerkennungsfenster 52 befindet sich ein Lüfter, der während des Kapselerkennungsvorgangs und/oder davor einen Luftstrom vor dem Kapselerkennungsfenster bewirkt, indem er Luft von ausserhalb der Kaffeemaschine ansaugt und durch einen Schlitz 71 im Gehäuse 2 vor das Kapselerkennungsfenster 52 bläst.

Ein weiteres Merkmal des Kapselerkennungsfensters ist bspw. in Fig. 11 ebenfalls dargestellt. Das Kapselerkennungsfenster 52 ist in einem nicht-rechten Winkel zur Achse 65 zwischen Kapselerkennungsposition und Kamerasensor 51 angeordnet. Dadurch wird effizient verhindert, dass Reflexionen der Lichtquellen die Abbildung der Kapsel auf dem Kamerasensor überlagern und die Auswertung verfälschen können. Der Winkel der Kapselerkennungsfensterebene zur Senkrechten auf die Achse 65 Kapselerkennungsposition-Kamerasensor (definiert als die jeweils durch die Mitte der Kamerasensorfläche bzw. der an der Kapselerkennungsposition befindlichen Kapsel gehend, siehe Fig. 5; die Achse 65 kann mit der optischen Achse der Kamera zusammenfallen) beträgt beispielsweise mindestens 10°, insbesondere mindestens 15°.

Eine erfindungsgemässe Maschine zum Zubereiten eines Brühgetränks aus einer Portionenkapsel, nämlich hier eine Kaffeemaschine, mit einem Brühmodul ist in **Figur 13** schematisch dargestellt. Es weist nebst dem Brühmodul einen Wassertank 91, eine Pumpe 92 zum Zuführen von Brühwasser zum Injektor 4 und eine Wasserheizungsvorrichtung 93 (bspw. Durchlauferhitzer) auf. Das Kapselerkennungsmodul 5 mit der Kamera 50 befindet sich insbesondere oberhalb der Brühkammer. Eine eingelegte Kapsel kann nach dem Kapselerkennungsprozess wie vorstehend beschrieben durch die Wirkung der Schwerkraft nach unten weitertransportiert werden.

Unterhalb des Brühmoduls ist ausserdem ein Kapselbehälter 95 angeordnet, in welchen die Kapseln 1 nach dem Brühprozess fallen bzw. transportiert werden. Das Bezugszeichen 98 bezeichnet eine Kaffeetasse.

### Bezugszeichenliste:

- 1: Brühmodul
- 2: Gehäuse
- 3: Ausleitvorrichtung
- 4: Injektor
- 5: Kapselerkennungsmodul
- 10: Kapsel
- 10': zweite Kapsel
- 11: Einlegeöffnung
- 12: Wasserzuführung
- 13: Getränkeauslauf
- 20: Antriebsscheibe
- 21: Erster Kniehebelarm
- 22: zweiter Kniehebelarm
- 23: Kniehebelbolzen
- 24: Ritzelwelle
- 25: Antriebsgehäuse
- 26: Achse
- 28: Führung
- 31: Führungsmittel
- 33: erste Bahn
- 35: Auflage
- 36: zweite Bahn
- 39: extraktionsseitige Anstechspitzen
- 41: Führungszapfen
- 42: Auflagepartie
- 43: weitere Auflagepartie
- 50: Kamera
- 51: Kamerasensor
- 52: Kapselerkennungsfenster
- 53: Diffusor
- 54: Diffusorfenster
- 55: Diffusorfensterhalter
- 56: Dichtungsrahmen
- 57: Platine
- 58: Blende
- 59: Linse
- 60: Linsenfixierung
- 61: Linsenhalter
- 62: LED
- 65: Achse
- 70: Lüfter
- 71: Schlitz
- 91: Wassertank
- 92: Pumpe
- 93: Wasserheizungsvorrichtung
- 95: Kapselbehälter
- 98: Kaffeetasse

## Patentansprüche

1. Brühmodul (1) zum Zubereiten eines Brühgetränks aus einer Portionenkapsel (10) aufweisend:
• Ein Gehäuse (2), welches eine Kapseleinlegeöffnung (11) aufweist, durch welche die Kapsel (10) eingelegt werden kann;
• ein erstes Brühmodulteil (3) und ein relativ zu diesem bewegbares zweites Brühmodulteil (4), wobei durch das erste und zweite Brühmodulteil eine Brühkammer bildbar ist, welche die sich in einer Brühposition befindende Kapsel beim Brühvorgang mindestens teilweise umgibt, wobei das Brühmodul eingerichtet ist, durch das Einleiten einer Brühflüssigkeit in die Kapsel ein Brühgetränk zu brühen und dieses aus der Kapsel abzuleiten;
• wobei das erste und zweite Brühmodulteil relativ zueinander zwischen drei verschiedenen, definierten Positionen bewegbar sind,
• wobei in der ersten Position die Brühkammer gebildet wird,
• wobei nach einer Bewegung von der ersten in die zweite Position die sich in der Brühkammer befindende Kapsel durch die Wirkung der Gravitation nach unten in einen Kapselbehälter (95) fällt, wobei aber in der zweiten Position die Brühmodulteile bewirken, dass eine in durch die Kapseleinlegeöffnung (11) eingelegte Kapsel vertikal oberhalb einer Höhe der Brühposition an einer Kapselerkennungsposition aufgehalten wird,
• wobei in der dritten Position eine an der Kapselerkennungsposition befindliche Kapsel von dieser nach unten, im Wesentlichen bis auf die Höhe der Brühposition, fallen kann,
• und wobei die zweite Position zwischen der ersten Position und der dritten Position ist.

2. Brühmodul nach Anspruch 1, weiter aufweisend ein Kapselerkennungsmodul (5), das eingerichtet ist, eine sich in der Kapselerkennungsposition befindende Kapsel (10) anhand von vordefinierten Merkmalen zu erkennen.

3. Brühmodul nach Anspruch 2, wobei die vordefinierten Merkmale optische Merkmale sind und das Kapselerkennungsmodul einen optischen Sensor aufweist.

4. Brühmodul nach Anspruch 3, wobei das Kapselerkennungsmodul ein zwischen der Kapselerkennungsposition und dem optischen Sensor angeordnetes Kapselerkennungsfenster aus einem transparenten Material aufweist.

5. Brühmodul nach Anspruch 4, aufweisend einen Lüfter zum Erzeugen eines Luftstroms auf der Seite des Kapselerkennungsfensters zur Kapselerkennungsposition hin.

6. Brühmodul nach Anspruch 4 oder 5, wobei das Kapselerkennungsfenster in einem nicht-rechten Winkel zu einer Achse zwischen der Kapselerkennungsposition und dem optischen Sensor angeordnet ist.

7. Brühmodul nach einem der Ansprüche 4-6, aufweisend mindestens eine Lichtquelle (62) zur Beleuchtung der Kapsel an der Kapselerkennungsposition, wobei die Lichtquelle auf der Seite des Kapselerkennungsfensters (52) zum optischen Sensor hin angeordnet ist.

8. Brühmodul nach Anspruch 7, aufweisend einen Diffusor (53) für von der Lichtquelle (62) erzeugtes Licht.

9. Brühmodul nach einem der vorangehenden Ansprüche, wobei die Bewegbarkeit des zweiten Brühmodulteils (4) relativ zum ersten Brühmodulteil (3) eine rein lineare relative Bewegung ermöglicht.

10. Brühmodul nach einem der vorangehenden Ansprüche, aufweisend einen elektrischen Antrieb für eine Bewegung des zweiten Brühmodulteils (4) relativ zum ersten Brühmodulteil (3).

11. Brühmodul nach einem der vorangehenden Ansprüche, aufweisend eine seitliche Führung (28) zum Definieren einer Orientierung der Kapsel (10) an der Kapselerkennungsposition, wobei die Kapsel auf einem Weg zwischen der Kapselerkennungsposition und der Brühposition oder einer Zwischenposition im Wesentlichen auf Höhe der Brühposition seitlich geführt ist.

12. Brühmodul nach einem der vorangehenden Ansprüche wobei eines der Brühmodulteile (3, 4) eine Auflagepartie (42) bildet, die fest und unbeweglich mit die Brühkammer bildenden Teilen dieses Brühmodulteils verbinden ist, welche Auflagepartie in einen Einwurfweg der Kapsel hinein ragt, wenn sich die Brühmodulteile an ihrer zweiten Position befinden.

13. Getränkezubereitungsmaschine, insbesondere Kaffeemaschine, aufweisend eine Wasserzufuhr, eine Pumpe (92) und ein Wassererhitzungsmittel (93) sowie ein Brühmodul nach einem der Ansprüche 1-10.

## Claims

1. A brewing module (1) for preparing a brewed drink from a portion capsule (10), comprising:
• a housing (2) which comprises a capsule insert opening (1), through which opening the capsule (10) can be inserted;
• a first brewing module part (3) and a second brewing module part (4) which is movable relative to this, wherein a brewing chamber which at least partly surrounds the capsule located in a brewing position during the brewing process can be formed by the first and the second brewing module part, wherein the brewing module is designed to brew a brewed drink by way of introducing a brewing fluid into the capsule, and to discharge the brewed drink out of the capsule;
• wherein the first and second brewing module part are movable relative to one another between three different, defined positions,
• wherein the brewing chamber is formed in the first position,
• wherein after a movement from the first into the second position, the capsule located in the brewing chamber drops downwards into a capsule container (95) due to the effect of gravity, wherein however in the second position, the brewing module parts have the effect that a capsule inserted through the capsule insert opening is held vertically above a height of the brewing position, at a capsule recognition position,
• wherein in the third position, a capsule located at the capsule recognition position can drop down from this, essentially to the height of the brewing position and
• wherein the second position is between the first position and the third position.

2. The brewing module according to claim 1, further comprising a capsule recognition module (5) which is designed to recognise a capsule (10) located in the capsule recognition position (10), on the basis of predefined features.

3. The brewing module according to claim 2, wherein the predefined features are optical features and the capsule recognition module comprises an optical sensor.

4. The brewing module according to claim 3, wherein the capsule recognition module comprises a capsule recognition window which is of a transparent material and which is arranged between the capsule recognition position and the optical sensor.

5. The brewing module according to claim 4, comprising a fan for producing an airflow on the side of the capsule recognition window which is towards the capsule recognition position.

6. The brewing module according to claim 4 or 5, wherein the capsule recognition window is arranged at a non-right angle to an axis between the capsules recognition position and the optical sensor.

7. The brewing module according to any one of the claims 4-6, comprising at least one light source (62) for illuminating the capsule at the capsule recognition position, wherein the light source is arranged at the side of the capsule recognition window (52) which is towards the optical sensor.

8. The brewing module according to claim 7, comprising a diffuser (53) for light produced by the light source (62).

9. The brewing module according to any one of the preceding claims, wherein the movability of the second brewing module part (4) relative to the first brewing module part (3) is a purely linear relative movement.

10. The brewing module according to any one of the preceding claims, comprising an electrical drive for a movement of the second brewing module part (4) relative to the first brewing module part (3).

11. The brewing module according to any one of the preceding claims, comprising a lateral guide (28) for defining an orientation of the capsule (10) at the capsule recognition position, wherein the capsule is laterally guided essentially at the height of the brewing position, on a path between the capsule recognition position and the brewing position or an intermediate position.

12. The brewing module according to any one of the preceding claims, wherein one of the brewing module parts (3, 4) forms a rest portion (42) which is connected in a fixed and immovable manner to parts of this brewing module part which form the brewing chamber, said rest portion projecting into an insertion path of the capsule when the brewing module parts are located at their second position.

13. A drinks preparation machine, in particular a coffee machine, comprising a water feed, a pump (92) and a water heating means (93), as well as a brewing module according to any one of the claims 1-10.

## Revendications

1. Module d'infusion (1) destiné à préparer une boisson infusée à partir d'une capsule (10) de portion, le module présentant :
un boîtier (2) qui présente une ouverture (11) d'insertion de capsule par laquelle la capsule (10) peut être insérée,
une première partie (3) de module d'infusion et une deuxième partie (4) de module d'infusion mobile par rapport à la première,
une chambre d'infusion pouvant être formée par la première et la deuxième partie du module d'infusion et entourant au moins en partie la capsule placée en une position d'infusion pendant une opération d'infusion,
le module d'infusion étant conçu pour infuser une boisson infusée en introduisant un liquide d'infusion dans la capsule et pour extraire la boisson infusée hors de la capsule,
la première et la deuxième partie de module d'infusion pouvant être déplacées l'une par rapport à l'autre entre trois positions définies et différentes,
la chambre d'infusion étant formée dans la première position,
après déplacement de la première jusque dans la deuxième position, la capsule placée dans la chambre d'infusion tombant vers le bas sous l'effet de la gravité dans un récipient (95) à capsules, mais dans la deuxième position, les parties du module d'infusion ayant pour effet qu'une capsule insérée par l'ouverture (11) d'insertion de capsule est maintenue verticalement au-dessus de la hauteur de la position d'infusion en une position de détection de capsule,
dans la troisième position, une capsule se trouvant dans la position de détection de capsule pouvant tomber vers le bas essentiellement jusqu'à hauteur de la position d'infusion,
la deuxième position étant située entre la première position et la troisième position.

2. Module d'infusion selon la revendication 1, présentant en outre un module (5) de détection de capsule conçu pour identifier à l'aide des caractéristiques prédéfinies une capsule (10) située en position de détection de capsule.

3. Module d'infusion selon la revendication 2, dans lequel les caractéristiques prédéfinies sont des caractéristiques optiques et le module de détection de capsule présente un capteur optique.

4. Module d'infusion selon la revendication 3, dans lequel le module de détection de capsule présente une fenêtre de détection de capsule en matériau transparent, disposée entre la position de détection de capsule et le capteur optique.

5. Module d'infusion selon la revendication 4, présentant un ventilateur qui forme un écoulement d'air sur le côté de la fenêtre de détection de capsule orienté vers la position de détection de capsule.

6. Module d'infusion selon les revendications 4 ou 5, dans lequel la fenêtre de détection de capsule est disposée à un angle non droit par rapport à un axe qui s'étend entre la position de détection de capsule et le capteur optique.

7. Module d'infusion selon l'une des revendications 4 à 6, présentant au moins une source (62) de lumière qui éclaire la capsule dans la position de détection de capsule, la source de lumière étant disposée sur le côté de la fenêtre (52) de détection de capsule tourné vers le capteur optique.

8. Module d'infusion selon la revendication 7, présentant un diffuseur (53) de la lumière émise par la source (62) de lumière.

9. Module d'infusion selon l'une des revendications précédentes, dans lequel la mobilité de la deuxième partie (4) du module d'infusion par rapport à la première partie (3) du module d'infusion permet un déplacement relatif purement linéaire.

10. Module d'infusion selon l'une des revendications précédentes, présentant un entraînement électrique permettant de déplacer la deuxième partie (4) du module d'infusion par rapport à la première partie (3) du module d'infusion.

11. Module d'infusion selon l'une des revendications précédentes, présentant un guide latéral (28) qui définit un' orientation de la capsule (10) dans la position de détection de capsule, la capsule étant guidée latéralement, essentiellement à la hauteur de la position d'infusion, sur un parcours qui s'étend dans la position de détection de capsule et la position d'infusion ou une position intermédiaire.

12. Module d'infusion selon l'une des revendications précédentes, dans lequel l'une des parties (3, 4) du module d'infusion forme une partie d'appui (42) qui est reliée de manière fixe et non mobile aux parties de cette partie du module d'infusion qui forme la chambre d'infusion, cette partie d'appui débordant dans un parcours d'insertion de la capsule lorsque les parties du module d'infusion se trouvent en leur deuxième position.

13. Machine de préparation de boissons, en particulier machine à café, présentant une amenée d'eau, une pompe (92) et un moyen (93) de chauffage d'eau, ainsi qu'un module d'infusion selon l'une des revendications 1 à 10.
